# EUROPEAN PATENT SPECIFICATION

(11) **EP 1 903 184 B1**
(45) Date of publication and mention of the grant of the patent: **01.05.2019**
(21) Application number: 07115361.3
(22) Date of filing: 30.08.2007
(51) Int. Cl.: F01D 9/02

(54) **Combustion turbine subsystem with twisted transition duct**
Subsystem einer Verbrennungsturbine mit verwundenem Übergangskanal
Sous-système de turbine à combustion avec conduit de transition tordu

(30) Priority: 21.09.2006 US 524739
(43) Date of publication of application: 26.03.2008
(73) Proprietor: Siemens Energy, Inc., Orlando, FL 32826-2399 (US)
(72) Inventor: Bancalari, Eduardo, Orlando, FL 32817 (US); Davies, Daniel, Palm City, FL 34990 (US); Huber, David J, Tequesta, FL 33469 (US); Kiesow, Hans-Jurgen, Orlando, FL 32828 (US); Ratliff, Phillip R, Oviedo, FL 32765 (US)
(74) Representative: Maier, Daniel Oliver

(56) References cited:
- EP-A1- 1 435 440
- WO-A1-2007/145607
- GB-A- 2 361 302
- US-A- 2 567 079
- US-A1- 2006 010 879
- US-B1- 6 589 015

## Description

### FIELD OF THE INVENTION

The invention relates to a combustion turbine subsystem.

### BACKGROUND OF THE INVENTION

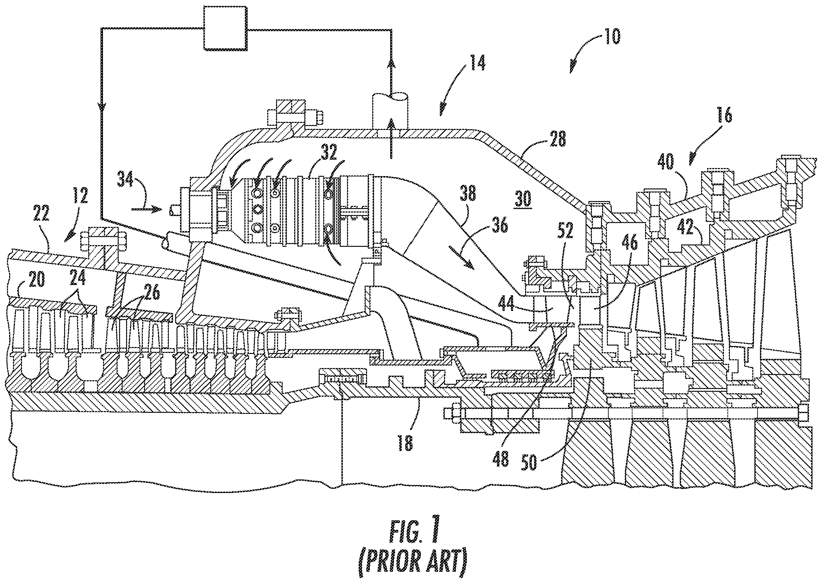

Referring to FIG. 1, there is shown a cross-section through a portion of a combustion turbine 10. The major components of the turbine are a compressor section 12, a combustion section 14 and a turbine section 16. A rotor assembly 18 is centrally located and extends through the three sections. The compressor section 12 can include cylinders 20, 22 that enclose alternating rows of stationary vanes 24 and rotating blades 26. The stationary vanes 24 can be affixed to the cylinder 20 while the rotating blades 26 can be mounted to the rotor assembly 18 for rotation with the rotor assembly 18.

The combustion section 14 can include a shell 28 that forms a chamber 30. Multiple combustors, for example, sixteen combustors (only one combustor 32 of which is shown) can be contained within the combustion section chamber 30 and distributed around a circle in an annular pattern. Fuel 34, which may be in liquid or gaseous form - such as oil or gas - can enter each combustor 32 and be combined with compressed air introduced into the combustor 32 from the chamber 30, as indicated by the unnumbered arrows surrounding the combustor 32. The combined fuel/air mixture can be burned in the combustor 32 and the resulting hot, compressed gas flow 36 can be exhausted to a transition duct 38 attached to the combustor 32 for routing to the turbine section 16.

The turbine section 16 can include a cylindrical housing 40, including an inner cylinder 42, can enclose rows of stationary vanes and rotating blades, including vanes 44 and blades 46. The stationary vanes 44 can be affixed to the inner cylinder 42 and the rotating blades 46 can be affixed to discs that form parts of the rotor assembly 18 in the region of the turbine section 16. The first row of vanes 44 and the first row of blades 46 near the entry of the turbine section 16 are generally referred to as the first stage vanes and the first stage blades, respectively.

Encircling the rotor assembly 18 in the turbine section 16 can be a series of vane platforms 48, which together with rotor discs 50, collectively define an inner boundary for a gas flow path 52 through the first stage of the turbine section 16. Each transition duct 38 in the combustion section 14 can be mounted to the turbine section housing 40 and the vane platforms 48 to discharge the gas flow 30 towards the first stage vanes 44 and first stage blades 46.

In operation, the compressor section 12 receives air through an intake (not shown) and compresses it. The compressed air enters the chamber 30 in the combustion section 14 and is distributed to each of the combustors 32. In each combustor 32, the fuel 34 and compressed air are mixed and burned. The hot, compressed gas flow 30 is then routed through the transition duct 38 to the turbine section 16. In the turbine section 16, the hot, compressed gas flow is turned by the vanes, such as the first stage vane 44, and rotates the blades, such as the first stage blade 52, which in turn drive the rotor assembly 18. The gas flow is then exhausted from the turbine section 16. The turbine system 10 can include additional exhaust structure (not shown) downstream of the turbine section 16. The power thus imparted to the rotor assembly 18 can be used not only to rotate the compressor section blades 26 but also to additionally rotate other machinery, such as an external electric generator or a fan for aircraft propulsion (not shown).

For a better understanding of the invention, a coordinate system can be applied to such a turbine system to assist in the description of the relative location of components in the system and movement within the system. The axis of rotation of the rotor assembly 18 extends longitudinally through the compressor section 12, the combustion section 14 and the turbine section 16 and defines a longitudinal direction. Viewed from the perspective of the general operational flow pattern through the various sections, the turbine components can be described as being located longitudinally upstream or downstream relative to each other. For example, the compressor section 12 is longitudinally upstream of the combustion section 14 and the turbine section 16 is longitudinally downstream of the combustion section 14.

The location of the various components away from the central rotor axis or other longitudinal axis can be described in a radial direction. Thus, for example, the blade 46 extends in a radial direction, or radially, from the rotor disc 50. Locations further away from a longitudinal axis, such as the central rotor axis, can be described as radially outward or outboard compared to closer locations that are radially inward or inboard.

The third coordinate direction-a circumferential direction--can describe the location of a particular component with reference to an imaginary circle around a longitudinal axis, such as the central axis of the rotor assembly 18. For example, looking longitudinally downstream at an array of turbine blades in a turbine engine, one would see each of the blades extending radially outwardly in several radial directions like hands on a clock. The "clock" position-also referred to as the angular position-of each blade describes its location in the circumferential direction. Thus, a blade in this example extending vertically from the rotor disc can be described as being located at the "12 o'clock" position in the circumferential direction while a blade extending to the right from the rotor disc can be described as being located at the "3 o'clock" position in the circumferential direction, and these two blades can be described as being spaced apart in the circumferential direction. Thus, the radial direction can describe the size of the reference circle and the circumferential direction can describe the angular location on the reference circle.

Generally, the longitudinal direction, the radial direction and the circumferential direction are orthogonal to each other. Also, direction does not necessarily connote positive or negative. For example, the longitudinal direction can be both upstream and downstream and need not coincide with the central axis of the rotor. The radial direction can be inward and outward, and is not limited to describing circular objects or arrays. The circumferential direction can be clockwise and counter-clockwise, and, like the radial direction, need not be limited to describing circular objects or arrays.

Further, depending on the context, the relevant position of two components relative to each other can be described with reference to just one of the coordinate directions. For example, the combustor 32 can be described as radially outboard of the blade 46 because the combustor 32 is located radially further away from the central axis of the rotor assembly 18 than the blade 46 is--even though the combustor 32 is not in the same longitudinal plane of the blade 44, and in fact, is longitudinally upstream of the blade 44 and may not be circumferentially aligned with a particular blade.

The coordinate system can also be referenced to describe movement. For example, gas flow 36 in the transition 38 is shown to flow in the direction of arrow 36. This gas flow 36 travels both longitudinally downstream from the combustor 32 to the turbine section 16 and radially inward from the combustor 32 to the first stage vanes 44 and blades 46.

In the context of describing movement, such as the flow of a gas, the circumferential direction can also be referred to as the tangential direction. When gas flows in the circumferential direction, a component of the flow direction is tangential to a point on the circular path. At any given point on the circle path, the circumferential flow can have a relatively larger tangential component and a relatively smaller radial component. Since the tangential component predominates, particularly for larger diameter paths, such as around vane and blade arrays in a turbine engine, a circumferential direction and tangential direction can be regarded as substantially the same.

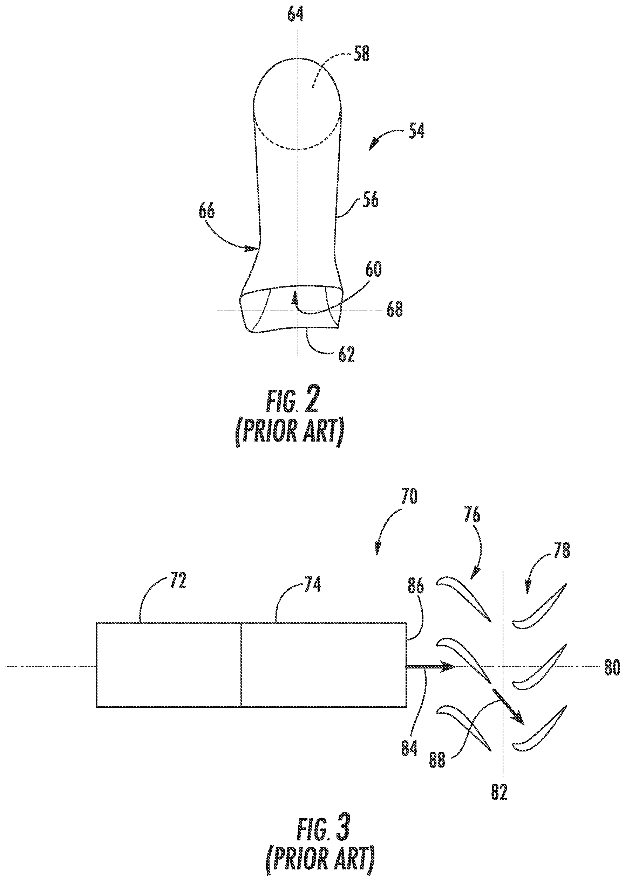

Bearing this coordinate system in mind and referring to FIG. 2, a transition duct 54 is shown alone as it would be seen when viewed from longitudinally downstream. This particular transition duct 54 is oriented in the 12 o'clock circumferential position and it should be understood that a turbine engine would have additional transition ducts, for example, a total of sixteen, spaced in an annular array.

The transition duct 54 can include a transition duct body 56 having an inlet 58 for receiving a gas flow exhausted by an associated combustor (not shown, but see FIG. 1). The transition duct body 56 can include an internal passage 60 from the inlet 58 to an outlet 62 from which the gas flow is discharged towards the turbine section (not shown). Because the combustor is radially outboard of the first stage of the turbine section (see FIG. 1), the transition duct 54 extends radially inwardly from its inlet 58 to its outlet 62. In FIG. 2, this radial direction is depicted by the axis 64. The transition duct 54 includes a longitudinal bend 66 near the outlet 62 to discharge the gas flow predominantly longitudinally. Because the gas flow in the transition duct 54 is redirected radially inwardly and then longitudinally, the transition duct 54 experiences substantial bending thrust in the radial direction 64. This radial thrust pushes the outlet region of the transition duct 54 radially outwardly (up in the plane of the page of the figure). To support the transition duct 54 against this bending thrust, the transition duct 54 can be radially supported by various braces (not shown) at its ends, as it well known in the art.

It can be seen that the outlet 62 and the inlet 58 are aligned along the circumferential or tangential direction, which is depicted by the axis 68. Thus, while the transition duct 54 routes the gas flow longitudinally downstream and radially inwardly, there is essentially no flow routing in the circumferential or tangential direction.

Reference is now made to FIG 3, focusing on a turbine subsection 70 that includes a combustor 72, a transition duct 74 and first stage vanes 76 and blades 78. FIG. 3 shows a view from above of the combustor 72, the transition duct 74, a few first stage vanes 76 and a few first stage blades 78, illustrated schematically. It should be understood that in a turbine, there would be additional first stage vanes spaced apart circumferentially to form an annular array. Similarly, there would be additional first stage blades spaced apart circumferentially to form an annular array. These additional vanes and blades are not shown in FIG. 3 to facilitate illustration. This schematic illustration is also not intended to be to scale. A turbine system would typically also include additional combustors and transitions, but a single combustor 72 and transition 74 are shown schematically for purposes of illustration.

From this top view, the longitudinal direction can be noted by reference to the axis 80. The circumferential or tangential direction can be noted by reference to the axis 82. The radial direction is not illustrated because the radial direction lies into and out of the page of the figure, but would be generally orthogonal to the longitudinal direction and the radial direction.

Gas flow, such as hot, compressed gas with perhaps some limited liquid content, is exhausted from the combustor 72 and routed by the transition duct 74 to the first stage vanes 76 and blades 78. The gas flow as discharged from the exit or outlet 86 of the transition duct 74 generally travels downstream in the longitudinal direction, as indicated by the arrow 84. There may be some incidental, small-scale radial and circumferential flow components to the discharged gas flow due to edge conditions 86 at the outlet and other factors. However, such side flow should be regarded as relatively de minimis compared to the overall flow direction, which is predominantly longitudinal, particularly in the central region of the flow away from the edges.

As this longitudinal gas flow 84 discharges from the outlet 86 of the transition duct 74, the flow passes the first stage vanes 76. The function of the first stage vanes 76 is to accelerate and turn the predominantly longitudinal flow in the circumferential direction 82 so that the predominant flow direction of the gas flow leaving the trailing edges of vanes 76 is angled in the circumferential or tangential direction relative to the longitudinal direction as shown, for example, by the arrow 88. This turned flow 88 thus has a longitudinal component and a circumferential component. The flow angle can be substantial, in the range of 40 degrees to 85 degrees measured from the longitudinal axis 80. By accelerating and angling the gas flow in the circumferential direction 82 relative to the longitudinal direction 80, the resulting gas flow 88 more effectively imparts its energy to the first row blades 78, which in turn rotate the associated rotor assembly (not shown).

The use of first stage vanes to accelerate and turn the longitudinal gas flow in the circumferential direction present several challenges. The vanes and the associated vane support structure (see FIG. 1) must have high strength characteristics to withstand the forces generated in changing the direction of an extremely hot, high pressure gas flow over a substantial angle in a relatively short distance. The temperature of the gas flow and the heat generated by this turning process also require a vane cooling system. The forces and heat involved can crack and otherwise damage the vanes and associated support structure. To address these various requirements and operating conditions, the first stage vanes and the associated support structure and cooling systems have developed into a complex system that can be expensive to manufacture, install, and, in the event of damage, repair and replace.

Thus, there is a need to accelerate and tangentially turn a gas flow for presentation to a first stage blade array without the complications and related costs and damage risks associated with first stage vanes.

US 2 567 079 A discloses a gas turbine power plant comprising a compressor, a gas turbine in line therewith and spaced axially therefrom, the gas turbine driving the compressor, and a plurality of combustion chambers extending between and connecting the compressor and the gas turbine. Each combustion chamber is disposed so that the working fluid passing therethrough is directed towards the gas turbine with a component of movement tangentially of the gas turbine.

EP 1 435 440 A1 discloses a pulsed combustion device including a support structure and a combustor carousel supported by the support structure for rotation relative thereto about an axis. The combustor carousel has a number of combustion conduits in a circumferential array. Each combustion conduit cyclically receives a charge and discharges combustion products of the charge.

GB 2 361 302 A discloses a discharge nozzle for a combustion chamber. The discharge nozzle comprises a hollow duct having walls of a sheet material. One or more portions of the walls are provided with at least one corrugation. The corrugation(s) allow the natural modes of vibration of the duct to be adjusted, thus preventing destructive resonance occurring.

### SUMMARY OF THE INVENTION

It is an object of the present invention to provide a combustion turbine subsystem that eliminates the need for first stage turbine section vanes.

It is another object of the present invention to provide a combustor transition duct that not only routes gas flow exhausted from a combustor to the first stage of a turbine section, but also discharges the gas flow at a tangential and circumferential angle that is appropriate for direct presentation to a first stage blade array, without turning by a first stage vane array.

The present invention is specified in claim 1 of the following set of claims.

Preferred features of the present invention are specified in claims 2 to 8 of the set of claims.

### BRIEF DESCRIPTION OF THE DRAWINGS

FIG. 1 is a cross-sectional view of a portion of a prior turbine engine;
FIG. 2 is an upstream longitudinal view of a prior transition duct;
FIG. 3 is a schematic radial view of a combustor, transition duct and first stage vanes and blades of a prior turbine engine;
FIG. 4 is an upstream longitudinal view of a circular array of transition ducts;
FIG. 5 is an upstream longitudinal view of one of the transition ducts shown in FIG. 4;
FIG. 6 is an upstream longitudinal view of a transition duct, depicted in lengthwise stations;
FIG. 7 is a radial view of the transition duct shown in FIG. 6, depicted in lengthwise stations;
FIG. 8 is a schematic radial view of a combustor, a transition duct and first stage blades;
FIG. 9 is an upstream perspective view of a transition exit support system;
FIG. 10 is a downstream perspective view of a support ring segment for the transition exit support system shown in FIG. 9;
FIG. 11 is an upstream perspective view of a portion of a transition array equipped with support ring fasteners;
FIG. 12 is a perspective top view of a transition in accordance with the present invention, depicted in lengthwise stations;
FIG. 13 is a perspective end view of the transition shown in FIG. 12 with lengthwise stations; and
FIG. 14 is a top view of the transition shown in FIG. 12 with lengthwise stations.

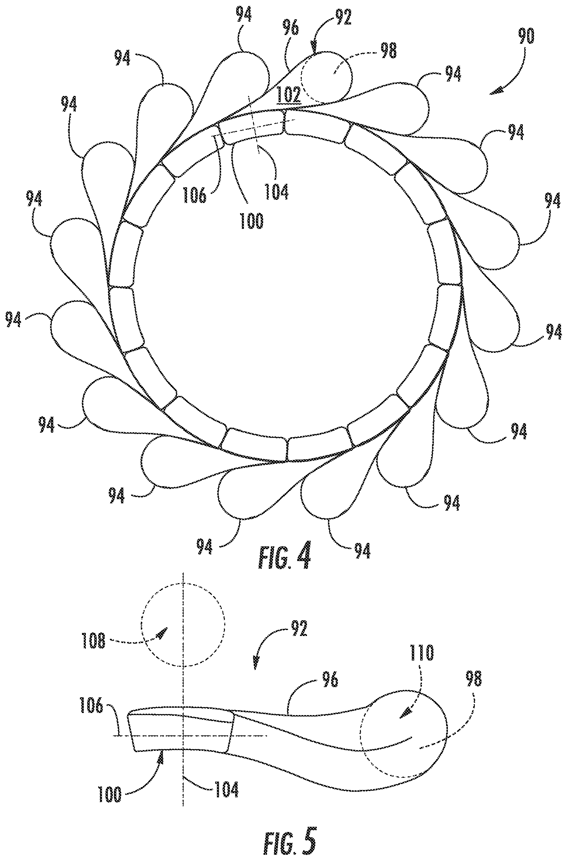

Figures 4 to 8 do not show embodiments according to the invention, but are helpful to understand aspects thereof.

### DETAILED DESCRIPTION OF EMBODIMENTS OF THE INVENTION

In the present invention, a combustion turbine transition duct imparts a tangential component to the gas flow discharged from the transition duct in substitution of the corresponding tangential turning by a first stage vane. Thus, with the present invention, first stage vanes in a turbine engine can be eliminated, avoiding various challenges attendant to use of first stage vanes. In the present invention, the transition is used in a combustion turbine subsystem having a first stage blade array and one or more combustors located longitudinally upstream and radially outboard of the first stage blade array. This subsystem is used in a combustion turbine system having a compressor section, a combustion section and a turbine section with appropriate structure for air intake and turbine exhaust to drive a central rotor for various applications, including electric power generation. Combustion turbine subsystems according to the present invention are not limited in application to, or by the details of, any particular turbine engine.

Referring to FIG. 4, an annular array 90 of transition ducts 92, 94 is shown without surrounding turbine components in an elevation as viewed from longitudinally downstream in a turbine. Each transition duct, such as transition duct 92, can include a transition body 96 having an inlet 98 and an outlet 100 and an internal passage 102 between the inlet 98 and the outlet 100 for routing a gas flow through the transition duct 92 from the inlet 98 to the outlet 100. The array 90 is shown illustrating an arrangement for use in a combustion turbine engine have 16 combustors (not shown). However, the number of transition ducts and their annular arrangement can be varied for use with more or less combustors.

Referring particularly to the transition duct 92 as representative and to the transition duct 92 shown in FIG. 5, this transition duct 92 is shown in a possible operational arrangement as it would be positioned in a turbine engine (not shown). The outlet 100 is shown in a circumferential position corresponding approximately to the 12 o'clock position of the annular flow path in the turbine section, similar to the corresponding position of the outlet of the transition duct 38 shown in the prior turbine engine (see FIG. 1). The prior transition duct 54 shown in FIG. 2 is similarly positioned. However, unlike the prior transition duct 38, 54, in FIGS. 1 and 2, the outlet 100 in the transition duct body 96 of a transition duct 92 is offset from the inlet 98 in all three coordinate directions--the longitudinal direction, the radial direction and the tangential direction, the latter two being represented by the axes 104, 106 respectively. The longitudinal axis is not shown because it is orthogonal to the axes 104, 106 and extends into and out of the page of the figures.

The term "offset" as used herein and in the claims means that the outlet is spaced from the inlet as measured along the coordinate direction(s) identified. For example, when the outlet is described as being tangentially offset from the inlet (or relative to the inlet), the outlet is spaced away from the inlet when measured in the tangential direction. Such spacing also means that the outlet and the inlet do not lie in a same plane orthogonal to the referenced direction or axis (which in this example is the tangential direction). Geometrically speaking, the inlet and outlet are not single points, but rather are two-dimensional areas. There is the possibility that the two areas may intersect or partially overlap such orthogonal plane depending on the extent of offset in any particular coordinate direction. Accordingly, the inlet and outlet are regarded as offset because the center point in the area defined by each of the inlet and outlet are not coplanar in a plane orthogonal to the referenced direction or axis.

With respect to the longitudinal offset, the transition duct 92 can be substituted in an existing turbine system and thus span the existing longitudinal distance between the longitudinally upstream combustor and the downstream entry to the first stage of the turbine section. The extent of longitudinal offset is not limited to existing turbine engine dimensions and can be any longitudinal length between the inlet 98 and the outlet 100. For example, if the inlet 98 is coupled to exhaust structure on a combustor, such as a head-on unit, liner or other exhaust framework, or if the inlet 98 is spaced from the combustor assembly but located to receive its exhaust, the longitudinal offset may be shorter. Also, the combustor may be inclined in the radial or circumferential direction, or both, resulting in a shorter or longer effective longitudinal spacing between the combustor and the first stage entry to a turbine section.

With respect to the radial offset, the various parts of the combustor assembly to which the inlet 98 can be coupled (or located near) and the radial positions and inclinations of these parts can affect the amount of radial offset between the inlet 98 and the outlet 100. However, because of the tangential offset discussed more fully below, the extent of radial offset can be less than the radial offset in prior transition ducts (compare FIG. 2 and FIG. 4). For the exemplary transition duct 92 shown in FIGS. 4 and 5, the extent of radial offset can be relatively small. Correspondingly, the radial bending thrust imparted on the transition duct body 92 by the turning gas flow within it can be correspondingly reduced.

It can be seen from the circumferential or tangential offset between the inlet 98 and the outlet 100 that the transition duct 92 would be connected to a combustor (not shown) that is not circumferential aligned with the outlet 100. In FIG. 5, another combustor location 108 in an annular arrangement is shown schematically in phantom. The combustor location 108 is circumferential aligned with the outlet 100. If a prior transition duct as shown in FIG. 2 were used, its inlet would be positioned generally at the location 108. However, the inlet 98 of the transition duct 92 is positioned at combustor location 110 which could be, for example, one combustor position away in the circumferential direction. Depending on the particular longitudinal, radial and circumferential location of the combustors with respect to the entry of the first stage of the turbine section, the particular combustor to which a transition duct is connected and its resulting outlet position can vary.

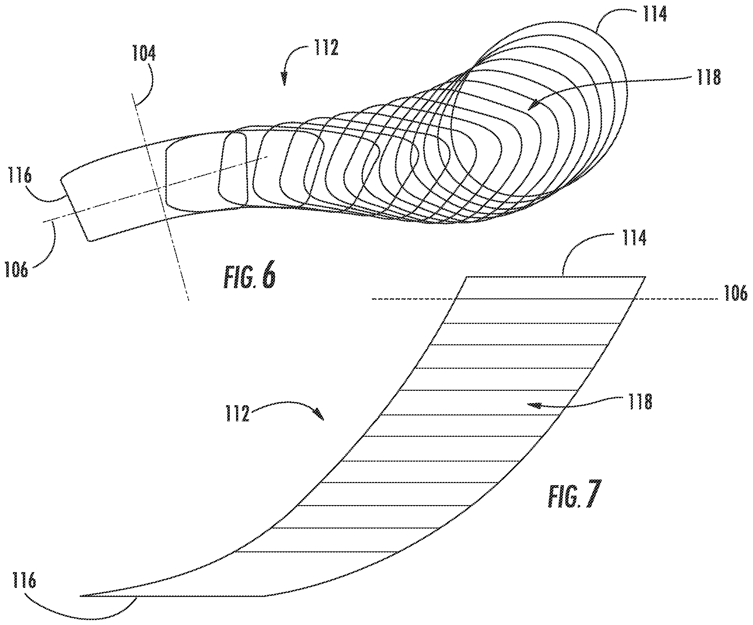

Referring to FIGS. 6 and 7, an exemplary transition duct 112 is shown in lengthwise stations, with each station depicting a cross sectional profile of the internal passage at that station. The inlet station 114 is shown as preferably round, and, in particular, elliptical. Other round profiles, such as circular, and other non-round profiles are also possible. The outlet station 116 is shown to be rectangular with the longer dimension in the circumferential direction denoted by the axis 106. The outlet 116 is preferably arcuate, that is, curved to generally correspond to the radius of curvature of the annular pattern formed by the spaced transition ducts (See FIG. 4). The outlet 116 can have other cross-sectional shapes. An outlet region of the transition duct body 112 surrounding and defining the outlet 116 can be elongated, rectangular, arcuate or all three, while the outlet has some other cross-sectional shape, such as circular or square, to name a few possibilities.

The internal passage 118 curves toward the outlet 116. The curvature, measured as a radius of curvature at any point, can change over the length of the internal passage 118 and some regions of the internal passage 118 can even be relatively straight. The curvature on the top, bottom and sides of the internal passage 118 can also vary or be the same with respect to each other. As shown by the stations, the cross-sectional profile of the internal passage 118 in the exemplary transition duct 112 changes from a preferably round profile at the inlet 114 to a preferably elongated, rectangular, arcuate profile at the outlet 116. The transition 112 can also include a reduction in the height of the internal passage 118 in the radial direction 104 from the inlet 114 toward the outlet 116. Additionally or alternatively, the width of the internal passage in the circumferential direction 106 can decrease from the inlet 114 toward the outlet 116 as best seen in FIG. 7.

The curvature of the internal passage 118 can include a decrease or complete discontinuance of radially inward curvature along the top and bottom before approaching the outlet 116. With this construction, the gas flow discharging from the outlet 116 will have little or no significant radial component to its direction of flow. Due to boundary conditions along the periphery of the outlet and edge conditions at the interface of the outlet with the first stage region of the turbine section, there may be incidental flow having a directional component in any or all of the longitudinal, radial and tangential directions. Such secondary flow should be considered de minimis because the general flow pattern, as measured particularly in the central region of the flow away from the edges, should be predominantly in a predetermined direction. Preferably, this general flow pattern has little or no radial component. The curvature of the transition duct 112 and the radially, longitudinally and tangentially offset of the outlet 116 relative to the inlet 114 results in a gas flow discharging from the outlet 116 at an angle in the tangential direction relative to the longitudinal direction.

While the internal passage 118 can have curvature features as described, the exterior surface of the transition duct body 112 need not necessarily follow the same curvature or shape profile. The exterior surface can have any of a number of shapes and surface features, for example, the exterior surface can be shaped to matingly fit with adjacent transition duct bodies and provide mounting surfaces for connecting to support braces and the like.

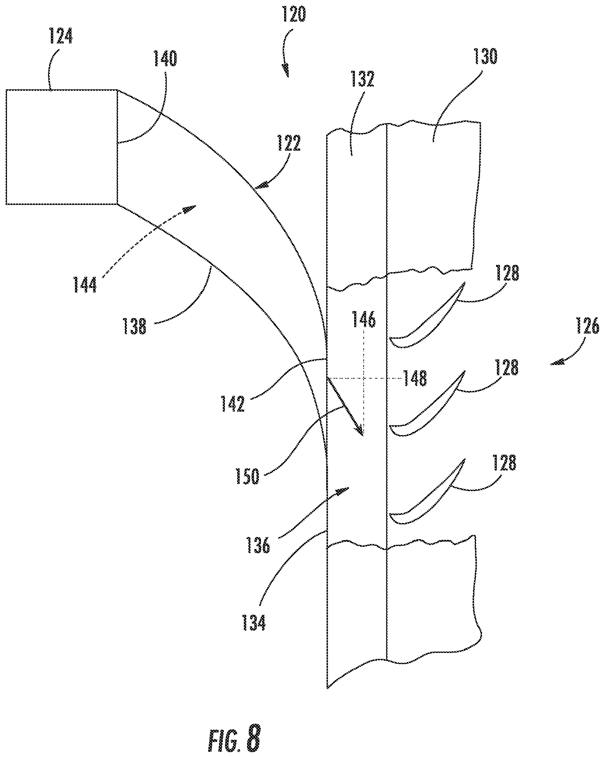

Referring to FIG. 8, a schematic view from above of a turbine subsystem 120 using a transition duct 122 is shown. The turbine subsystem 120 can include a combustor 124 and a first stage turbine blade array 126 located longitudinally downstream of the combustor 124. The combustor 124 is also shown radially outboard of the first stage turbine blade array 126 relative to a central axis of a rotor (not shown) to which the first stage turbine blade array 126 would be affixed through a rotor disc or the like. The first stage blade array 126 includes a plurality of blades 128 extending radially from the rotor assembly and spaced circumferentially to form a circular array. Only three such blades 128 are shown in FIG. 8 schematically for ease of illustration, but the array 126 would have additional blades. The turbine engine subsystem 120 can also include a first stage housing for enclosing the first stage blade array 126. The first stage housing can include a blade ring 130 which is shown schematically and partially broken away to reveal the blades 128 inside. The upstream side 134 of the blade ring 130 is preferably adapted to couple to the transition outlet 142. The spacing between the outlet 142 of the transition duct 122 and the leading edges of the blades 128 is preferably substantially the same as the distance between first stage vane trailing edges and the first stage blade leading edges used in prior systems. Alternatively, the spacing between the outlet 142 and the leading edges of the blades 128 can be longer or shorter than prior vane-blade spacings. The spacing depicted in FIG. 8 is not intended to be to scale and is in fact spaced greater than preferred spacing to facilitate illustration of the discharge flow 150, discussed more fully below.

The turbine engine subsystem 120 includes the transition duct 122 located between the combustor 124 and the first stage blade array 126. The transition duct 122 includes a transition duct body 138 having an inlet 140 located to receive a gas flow exhausted from the combustor 124 and an outlet 142 to discharge a gas flow toward the first stage blade array 126 with an internal passage 144 therebetween, as previously described. Only a single transition duct 122 is shown schematically in FIG. 8, but it should be understood that the turbine engine subsystem 120 can have multiple transition ducts, each corresponding to a combustor in a turbine engine. The inlet 140 can be coupled to the combustor assembly or support structure associated with the combustor, such as a combustor liner (not shown). Alternatively, the transition duct 122 can be attached to the framework of the combustion chamber, such as the combustion shell (not shown), and spaced from the combustor 124 but located to receive the combustion exhaust gas flow into the inlet 140.

The outlet 142 is offset from the inlet 140 in the three coordinate directions longitudinally, radially and tangentially. The internal passage 144 is curved between the inlet 140 and outlet 142 at least along a portion of its length. An outlet region of the transition duct body 138 surrounds and defines the outlet 142 and can be coupled to the first stage housing, such as the blade ring 130. Alternatively, the outlet region can be coupled to and supported by other support structure within the combustion chamber, and the outlet 142 can be spaced from the blade ring 130 but located to discharge the gas flow into the first stage blade array 126.

The gas flow discharged from the outlet 142 is angled in the tangential direction 146 relative to the longitudinal direction 148 as depicted by the arrow 150. This gas flow direction 150 signifies the predominant flow direction of the gas flow, particularly in its relatively uniform central region away from the structural sides and edges. It can be seen that this gas flow direction 150 has a longitudinal component and a tangential component. As discussed above, there may be a slight radial component (into or out of the page of the figure), but preferably this radial component is minimized or eliminated by relative placement of the subsystem components and the curvature of the internal passage 144.

Because the gas flow discharges from the transition duct outlet 142 at an angle 150 in the tangential direction, first stage vanes can be eliminated. The complexity and costs of first stage vanes and their associated structural supports and cooling systems can likewise be avoided. Instead, the outlet 142 of the transition duct 122 can be offset longitudinally, radially and tangentially from the inlet 140 with a curved internal passage 144 therebetween to turn the gas flow to a discharge angle 150 appropriate for direct routing to the first stage blade array 128. The discharge angle 150 is preferably in the range of about 40 degrees to about 85 degrees.

A transition duct as described above turns the gas flow from the combustor to the first stage of the turbine section most significantly in the tangential direction, with relatively small turning in the radial direction and in the longitudinal direction. As a result, the thrust loads imparted on the transition duct can be higher in the tangential direction and lower in the radial and longitudinal directions. Also, because the transition duct performs the turning function previously performed by first stage vanes, the mechanical and heat loads can be high. Accordingly, the transition duct is preferably made from materials that exhibit high strength properties in high temperature conditions. The transition duct can thus be made at least partially of ceramic matrix composite (CMC) material systems, metals, composite materials, and other appropriate materials. Further, known cooling techniques, such as impingement cooling, effusion cooling, steam cooling and forced convection cooling, can be used.

Bearing support can be provided at the outlet region and inlet region of the transition duct. The inlet region can be secured to the combustor assembly or associated support structure, such as a combustor liner, as in the past. The outlet region is preferably supported by a braced ring support as discussed more fully below. Additionally, the transition duct array (see FIG. 4) can be supported between adjacent transition ducts by baffles, struts and the like or by additional ring supports that are braced to the surrounding support structure, such as the combustion chamber shell or a framework extending therefrom.

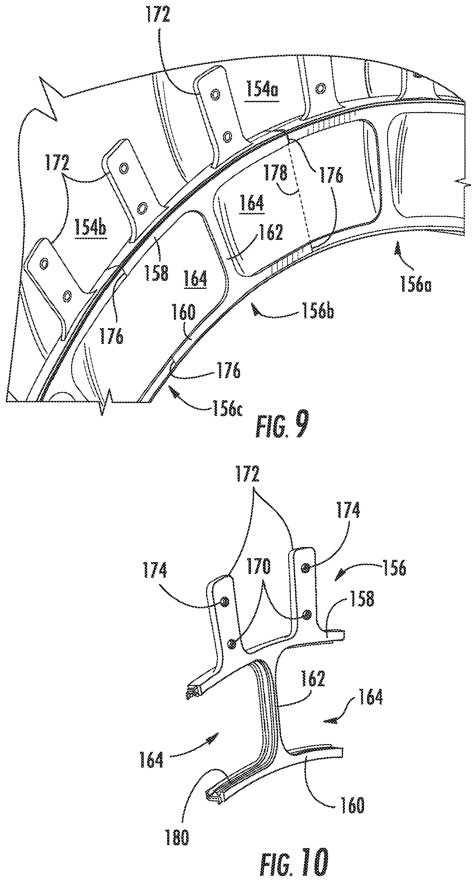

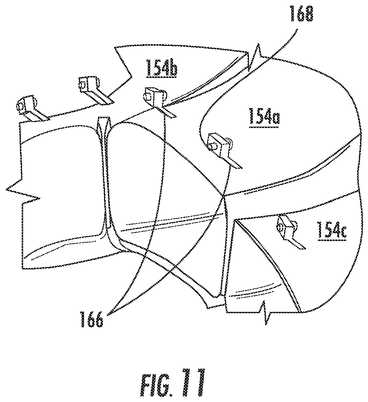

Referring to FIGS. 9-11, the outlet region 154a, 154b, 154c of each transition duct can be supported by ring segments 156a, 156b, 156c that are spaced in a circular fashion to collectively form a support ring. Each support ring segment 156 can have an outer span 158 and an inner span 160, which are preferably arcuate, but can be straight. The spans 158, 160 are joined by a central column 162 defining a lateral opening 164 on either side of the central column 162 into which a portion of one of the transition duct bodies is inserted. Two adjacent ring segments 156a, 156b enclose a common transition duct body 154a so that the inserted portion of the common transition duct body 154a is substantially surrounded.

The outlet region 154a, 154b, 154c of each transition duct body can be equipped with fastener posts 166 that provide adjustable fasteners, such as threaded bolt 168, for mounting in corresponding apertures 170 in the ring segment 156. The apertures 170 are preferably provided on support legs, like braces 172, that extend out of one of the spans, preferably the outer span 158. The braces 172 can provide additional apertures 174 or other mounting structure for coupling to surrounding support structure, such as a blade ring or other the first stage housing of the turbine section (not shown). Braces 172 can extend radially outwardly to couple to radially outer structure of the first stage housing. Braces can additionally or alternatively extend radially inwardly from the inner spans to affix to radially inward support structure of the first stage housing. The braces 172 or other support legs are preferably dimensioned and constructed of high strength material to provide bearing support to primarily circumferential loads.

The use of ring segments can also assist in reducing longitudinal leakage in the spacing between adjacent transition ducts. As shown in FIG. 9, the junctions 176 of adjacent ring segments such as segments 156b and 156c occur along an imaginary line 178 across the outlet of the common transition duct body 154b, whereby leakage between adjacent transition duct bodies is at least partially prevented. Any spacing in a junction 176 can be sealed by appropriate bridging material. Further, as shown in FIG. 10, the spans 158, 160 and the column 162 of the ring segment 156 can provide a rope seal 180 along each lateral opening 164 to seal against the inserted transition duct body portion. Preferably, two such rope seals are used, but one, three or more are also possible.

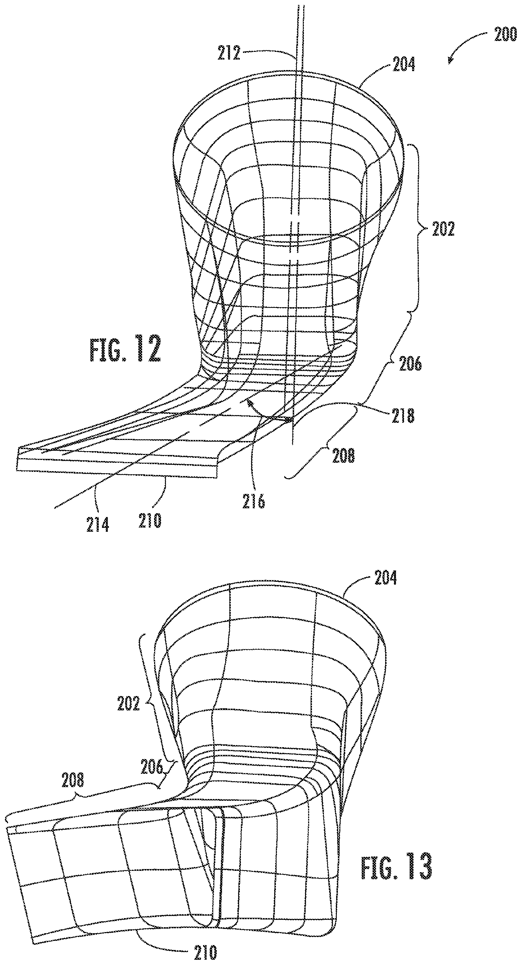

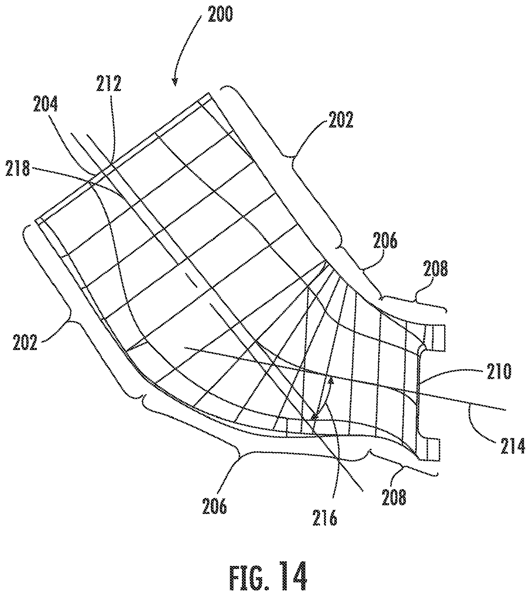

FIGS. 12-14 show a transition duct 200 in accordance with the present invention. The transition duct 200 is formed from an inlet section 202 extending downstream from an inlet 204, an exhaust gas diverter section 206 extending downstream from the inlet section 202, and an outlet section 208 extending from the exhaust gas diverter section 206 to an outlet 210. The inlet section 202 and the outlet section 208, as shown in FIG 14, are substantially linear. The exhaust gas diverter section 206 is curved so that a gas stream flowing through the transition 200 is redirected in the exhaust gas diverter section 206. The exhaust gas diverter section 206 is curved such that a longitudinal axis 212 of the inlet section 202 is nonparallel with a longitudinal axis 214 of the outlet section 208.

The inlet section 202 of the transition duct 200 extends from a combustor generally parallel to the longitudinal axis 218 of the turbine blade assembly. The longitudinal axis 214 of the outlet section 208 may be positioned at an angle of between about 40 degrees and about 85 degrees relative to the longitudinal axis 212 of the inlet section 202. Thus, the exhaust gas diverter section 206 may be curved such that the longitudinal axis 214 of the outlet section 208 is positioned at an angle 216 of between about 40 degrees and about 85 degrees relative to the longitudinal axis 218 of the turbine blade assembly. Therefore, the transition duct 200 may be configured to exhaust gases from the outlet 210 generally at an angle of between about 40 degrees and about 85 degrees relative to the longitudinal axis 218 of the turbine blade assembly. The gas flow is discharged from the outlet 210 substantially in a plane defined by the longitudinal direction and the tangential direction such that the discharged gas flow direction has substantially no radial component.

As shown in FIG. 12, the inlet section 202 may have a generally cylindrical, or round, inlet 204. The round inlet 240 may transition to a generally trapezoidal shaped cross-section before intersecting with the exhaust gas diverter section 206. The exhaust gas diverter section 206 and the outlet section 208 may have cross-sections with a generally trapezoidal shape. Trapezoidal shaped cross-sections may include constant or varying corner radii.

Thus, in the present invention, a combustor transition duct not only routes gas flow from a combustor to a first stage section of a turbine system, but also turns the gas flow in the tangential direction relative to the longitudinal direction for direct presentation to a first stage blade array, thereby eliminating the need for a first stage vane row.

## Claims

1. A combustion turbine subsystem comprising: a transition duct (200) for routing a gas flow in the combustion turbine subsystem; a first stage blade array having a plurality of blades extending in a radial direction from a rotor assembly for rotation in a circumferential direction, said circumferential direction having a tangential direction component, the rotor assembly axis defining a longitudinal direction (218); and at least one combustor located longitudinally upstream of the first stage blade array and located radially outboard of the first stage blade array, said transition duct (200) comprising:
a transition duct body (200) including an internal passage extending between an inlet (204) and an outlet (210), wherein the transition duct body (200) is located between the combustor and the first stage blade array to receive gas flow from the combustor into the internal passage through the inlet (204) and to discharge the gas flow via the outlet (210) toward the first stage blade array;
an exhaust gas diverter section (206) positioned between a substantially linear inlet section (202) extending downstream from the inlet (204) of the transition duct body (200) and a substantially linear outlet section (208) extending downstream to the outlet (210) of the transition duct body (200), wherein a longitudinal axis (212) of the inlet section (202) is generally parallel to the longitudinal direction (218) defined by the rotor assembly axis, wherein the exhaust gas diverter section (206) is curved such that a longitudinal axis (214) of the outlet section (208) is nonparallel with the longitudinal direction (218) defined by the rotor assembly axis;
wherein the outlet (210) is offset from the inlet (204) in the longitudinal direction, the radial direction and the tangential direction; and
wherein the curving of the exhaust gas diverter section (206) is such that the outlet section (208) of the transition duct body (200) discharges gas flow in a direction that is at an angle (216) between the longitudinal direction (218) and the tangential direction for direct presentation to the first stage blade array.

2. The combustion turbine subsystem of claim 1, wherein the curving of the exhaust gas diverter section (206) is such that the longitudinal axis (214) of the outlet section (208) is positioned at an angle between about 40 degrees and about 85 degrees relative to the longitudinal direction (218) defined by the rotor assembly axis.

3. The combustion turbine subsystem of claim 1, wherein the outlet (210) is generally rectangular in the tangential direction.

4. The combustion turbine subsystem of claim 1, wherein the outlet (210) is arcuate in the tangential direction.

5. The combustion turbine subsystem of claim 1, wherein the inlet section (202) transitions from a generally round cross-sectional profile at the inlet (204) to a generally trapezoidal cross-sectional profile at an intersection with the exhaust gas diverter section (206).

6. The combustion turbine subsystem of claim 1, wherein the width of the internal passage in the tangential direction decreases from the inlet (204) toward the exhaust gas diverter section (206).

7. The combustion turbine subsystem of claim 6, wherein the height of the internal passage in the radial direction decreases from the inlet (204) toward the exhaust gas diverter section (206).

8. The combustion turbine subsystem of claim 1, wherein the transition duct (200) is made at least partially from ceramic matrix composite material.

## Patentansprüche

1. Gasturbinenteilsystem, das Folgendes umfasst: ein Übergangsstück (200) zum Leiten eines Gasstroms in dem Gasturbinenteilsystem, eine Laufschaufelanordnung einer ersten Stufe mit mehreren Laufschaufeln, die von einer Rotorbaugruppe zum Drehen in einer Umfangsrichtung aus in radialer Richtung verlaufen, wobei die Umfangsrichtung eine tangentiale Richtungskomponente aufweist, wobei die Achse der Rotorbaugruppe eine Längsrichtung (218) definiert, und mindestens eine Brennkammer, die in Längsrichtung stromaufwärts von der Laufschaufelanordnung der ersten Stufe und radial außerhalb der Laufschaufelanordnung der ersten Stufe liegt, wobei das Übergangsstück (200) Folgendes umfasst:
einen Übergangsstück-Hauptteil (200) mit einem Innenkanal, der zwischen einem Eintritt (204) und einem Austritt (210) verläuft, wobei der Übergangsstück-Hauptteil (200) zwischen der Brennkammer und der Laufschaufelanordnung der ersten Stufe liegt und so den Gasstrom aus der Brennkammer über den Eintritt (204) im Innenkanal aufnimmt und über den Austritt (210) in Richtung der Laufschaufelanordnung der ersten Stufe abgibt,
einen Abgasumlenkabschnitt (206), der zwischen einem stromabwärts vom Eintritt (204) des Übergangsstück-Hauptteils (200) verlaufenden, im Wesentlichen linearen Eintrittsabschnitt (202) und einem stromabwärts zum Austritt (210) des Übergangsstück-Hauptteils (200) verlaufenden, im Wesentlichen linearen Austrittsabschnitt (208) angeordnet ist, wobei eine Längsachse (212) des Eintrittsabschnitts (202) allgemein parallel zu der von der Achse der Rotorbaugruppe definierten Längsrichtung (218) verläuft, wobei der Abgasumlenkabschnitt (206) so gekrümmt ist, dass eine Längsachse (214) des Austrittsabschnitts (208) zu der von der Achse der Rotorbaugruppe definierten Längsrichtung (218) nicht parallel ist,
wobei der Austritt (210) zum Eintritt (204) in Längsrichtung, radialer und tangentialer Richtung versetzt ist und
wobei die Krümmung des Abgasumlenkabschnitts (206) so gestaltet ist, dass der Austrittsabschnitt (208) des Übergangsstück-Hauptteils (200) den Gasstrom zur direkten Vorlage an der Laufschaufelanordnung der ersten Stufe in einer Richtung abgibt, die in einem Winkel (216) zwischen der Längsrichtung (218) und der tangentialen Richtung liegt.

2. Gasturbinenteilsystem nach Anspruch 1, wobei die Krümmung des Abgasumlenkabschnitts (206) so gestaltet ist, dass die Längsachse (214) des Austrittsabschnitts (208) in Bezug zu der von der Achse der Rotorbaugruppe definierten Längsrichtung (218) in einem Winkel zwischen etwa 40 Grad und etwa 85 Grad angeordnet ist.

3. Gasturbinenteilsystem nach Anspruch 1, wobei der Austritt (210) in tangentialer Richtung allgemein rechteckig ist.

4. Gasturbinenteilsystem nach Anspruch 1, wobei der Austritt (210) in tangentialer Richtung gebogen ist.

5. Gasturbinenteilsystem nach Anspruch 1, wobei der Eintrittsabschnitt (202) von einem allgemein runden Querschnittsprofil am Eintritt (204) zu einem allgemein trapezförmigen Querschnittsprofil an einer Schnittstelle mit dem Abgasumlenkabschnitt (206) übergeht.

6. Gasturbinenteilsystem nach Anspruch 1, wobei sich die Breite des Innenkanals in tangentialer Richtung vom Eintritt (204) hin zum Abgasumlenkabschnitt (206) verringert.

7. Gasturbinenteilsystem nach Anspruch 6, wobei sich die Höhe des Innenkanals in radialer Richtung vom Eintritt (204) hin zum Abgasumlenkabschnitt (206) verringert.

8. Gasturbinenteilsystem nach Anspruch 1, wobei jedes Übergangsstück (200) zumindest teilweise aus keramischem Faserverbundwerkstoff hergestellt ist.

## Revendications

1. Sous-système de turbine à combustion comprenant : un conduit de transition (200) pour acheminer un flux gazeux dans le sous-système de turbine à combustion, un aubage mobile de premier étage comportant une pluralité d'aubes mobiles s'étendant dans une direction radiale depuis un ensemble rotorique en vue de leur rotation dans une direction circonférentielle, ladite direction circonférentielle comportant une composante directionnelle tangentielle, l'axe de l'ensemble rotorique définissant une direction longitudinale (218), et au moins un dispositif de combustion situé, dans le plan longitudinal, en amont de l'aubage mobile de premier étage et situé, dans le plan radial, à l'extérieur de l'aubage mobile de premier étage, ledit conduit de transition (200) comprenant :
un corps (200) de conduit de transition comprenant un passage interne s'étendant entre une entrée (204) et une sortie (210), étant entendu que le corps (200) de conduit de transition est situé entre le dispositif de combustion et l'aubage mobile de premier étage en vue de recevoir dans le passage interne, via l'entrée (204), le flux gazeux provenant du dispositif de combustion et d'évacuer le flux gazeux via la sortie (210) vers l'aubage mobile de premier étage ;
une section (206) de déviation des gaz d'échappement positionnée entre une section d'entrée sensiblement linéaire (202) s'étendant en aval depuis l'entrée (204) du corps (200) de conduit de transition et une section de sortie sensiblement linéaire (208) s'étendant en aval jusqu'à la sortie (210) du corps (200) de conduit de transition, étant entendu qu'un axe longitudinal (212) de la section d'entrée (202) est globalement parallèle à la direction longitudinale (218) définie par l'axe de l'ensemble rotorique, étant entendu que la section (206) de déviation des gaz d'échappement est courbée de telle sorte qu'un axe longitudinal (214) de la section de sortie (208) soit non parallèle à la direction longitudinale (218) définie par l'axe de l'ensemble rotorique ;
étant entendu que la sortie (210) est décalée par rapport à l'entrée (204) dans la direction longitudinale, la direction radiale et la direction tangentielle, et
étant entendu que la courbure de la section (206) de déviation des gaz d'échappement est telle que la section de sortie (208) du corps (200) de conduit de transition évacue le flux gazeux dans une direction qui forme un angle (216) entre la direction longitudinale (218) et la direction tangentielle en vue de sa présentation directe à l'aubage mobile de premier étage.

2. Sous-système de turbine à combustion selon la revendication 1, étant entendu que la courbure de la section (206) de déviation des gaz d'échappement est telle que l'axe longitudinal (214) de la section de sortie (208) est positionné sous un angle compris entre environ 40 degrés et environ 85 degrés par rapport à la direction longitudinale (218) définie par l'axe de l'ensemble rotorique.

3. Sous-système de turbine à combustion selon la revendication 1, étant entendu que la sortie (210) est globalement rectangulaire dans la direction tangentielle.

4. Sous-système de turbine à combustion selon la revendication 1, étant entendu que la sortie (210) est arquée dans la direction tangentielle.

5. Sous-système de turbine à combustion selon la revendication 1, étant entendu que la section d'entrée (202) fait la transition entre un profil de section transversale globalement ronde à l'entrée (204) et un profil de section transversale globalement trapézoïdale à une intersection avec la section (206) de déviation des gaz d'échappement.

6. Sous-système de turbine à combustion selon la revendication 1, étant entendu que la largeur du passage interne dans la direction tangentielle diminue de l'entrée (204) vers la section (206) de déviation des gaz d'échappement.

7. Sous-système de turbine à combustion selon la revendication 6, étant entendu que la hauteur du passage interne dans la direction radiale diminue de l'entrée (204) vers la section (206) de déviation des gaz d'échappement.

8. Sous-système de turbine à combustion selon la revendication 1, étant entendu que le conduit de transition (200) est fait au moins partiellement en matériau composite à matrice céramique.
